(19) Europäisches Patentamt
European Patent Office
Office européen des brevets

(11) **EP 2 196 777 B1**

(12) **EUROPÄISCHE PATENTSCHRIFT**

(45) Veröffentlichungstag und Bekanntmachung des Hinweises auf die Patenterteilung:
**23.10.2013  Patentblatt 2013/43**

(51) Int Cl.:
***G01D 11/30*** *(2006.01)*

(21) Anmeldenummer: **09178695.4**

(22) Anmeldetag: **10.12.2009**

(54) **Sensorhalterung für mindestens einen Sensor an einer Gasturbine**

Sensor holder for at least one sensor at a gas turbine

Support de capteur pour au moins un capteur sur une turbine à gaz

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **12.12.2008  DE 102008061648**

(43) Veröffentlichungstag der Anmeldung:
**16.06.2010  Patentblatt 2010/24**

(73) Patentinhaber: **Rolls-Royce Deutschland Ltd & Co KG**
**15827 Blankenfelde-Mahlow (DE)**

(72) Erfinder: **Lenk, Olaf**
**12527 Berlin (DE)**

(74) Vertreter: **Gross, Felix et al**
**Patentanwälte Maikowski & Ninnemann**
**Postfach 15 09 20**
**10671 Berlin (DE)**

(56) Entgegenhaltungen:
**EP-A2- 0 768 472    US-A- 4 860 442**

EP 2 196 777 B1

**Beschreibung**

Die Erfindung betrifft eine Sensorhalterung für mindestens einen Sensor an einer Gasturbine.

Gasturbinen, die z.B. als Strahltriebwerke eingesetzt werden, besitzen komplexe Messketten zur Überprüfung einzelner Betriebsparameter und der Steuerung in Abhängigkeit dieser Betriebsparameter (z.B. Temperatur, Druck, Schwingung). Die Parametermessung wird über Sensoren durchgeführt, die an der Gasturbine bzw. am Strahltriebwerk befestigt sind. Die durch die Parametermessung gewonnenen Betriebsparameter werden einer Signalverarbeitung zugeführt. Im Ergebnis dieser Signalverarbeitung ist eine aktive Steuerung der Gasturbine bzw. des Strahltriebwerks möglich, wodurch ein geschlossener Regelkreis entsteht.

Die zur Parametermessung verwendeten Sensoren müssen an einer Struktur befestigt werden, wobei im Allgemeinen metallische Halterungen verwendet werden. Diese metallischen Halterungen werden derzeit aus geschweißten Blechen oder durch Fräsen aus Vollmaterial hergestellt.

Die Hauptfunktionalität der Halterungen ist die Gewährleistung einer stabilen Position der Sensoren, ohne deren Messcharakteristiken zu beeinflussen. Eine solche Beeinflussung kann erfolgen, wenn das Eigenschwingverhalten der Halterungen durch die laufende Gasturbine bzw. das Strahltriebwerk derart angeregt wird, dass die Sensoren in ihrem Betrieb gestört werden. Diese Störung erfolgt dadurch, dass bei der Anregung einer Eigenfrequenz der Halterung lokal hohe Schwingverformungen auftreten.

Die US 4 860 442 A beschreibt eine zur Befestigung eines Sensors an einer Gasturbine geeignete, metallkeramische Sensorhalterung.

Metallische Halterungen bieten nur eine eingeschränkte Möglichkeit, ihr dynamisches Verhalten zu beeinflussen. Dazu gehören sowohl die Materialwahl als auch die Formgebung. Gerade im Bereich der Niedrigtemperaturanwendung bedingt eine Veränderung von Aluminium auf Titan oder Stahl eine signifikante Gewichtszunahme. Die Formgebung ist oft eingeschränkt durch den zur Verfügung stehenden Bauraum.

Aufgrund der Dichte des verwendeten Materials und der Halterungsgeometrie ergeben sich für die Halterungen Eigenfrequenzen, die die Messsignale der Sensoren stören. Durch zum Teil aufwendige Modifikationen der Halterungen wird versucht, die Eigenfrequenzen aus dem Resonanzbereich zu verschieben.

Das Eigenschwingverhalten ist abhängig von den drei Parametern Masse, Steifigkeit und Dämpfung der Halterungen. Da die Masse und die Steifigkeit gegenläufige Wirkungen besitzen, ist die Variabilität in der Einstellung des Eigenschwingverhaltens der Halterungen sehr schwierig.

Die EP 0 768 472 A2 beschreibt eine Welle für ein Kraftfahrzeug, bei der die Eigenfrequenz durch Wahl des E-Moduls von Kohlenstofffasern in einem Kohlefaserverbundmaterial eingestellt wird. Die Eigenfrequenz der Welle muss höher als die Drehzahl sein.

Die JP 09317821 A offenbart, dass die Eigenfrequenz eines faserverstärkten Verbundwerkstoffs mittels einer in den Verbundwerkstoff eingebetteten Gedächtnislegierung eingestellt wird. Es wird auch beschrieben, dass die Einstellung der Eigenfrequenz durch Einstellung des E-Moduls des Verbundwerkstoffes erfolgt.

Die beiden Druckschriften beschränken sich dabei auf die Einstellung des E-Moduls mit Hilfe der Materialauswahl.

Der Erfindung liegt daher die Aufgabe zu Grunde, die Sensorhalterung so auszubilden, dass im Betrieb eine stabile Position der Sensoren gewährleistet ist.

Diese Aufgabe wird erfindungsgemäß mit einer Sensorhalterung für mindestens einen Sensor an einer Gasturbine nach Anspruch 1 gelöst. Vorteilhafte Ausgestaltungen der Erfindung sind in den abhängigen Ansprüchen enthalten.

Erfindungsgemäß besteht die Lösung der Aufgabe in einer Sensorhalterung für mindestens einen Sensor an einer Gasturbine, die aus mindestens einem Faserverbundmaterial gebildet ist, wobei die in das Faserverbundmaterial eingebetteten Fasern gegenüber einer Achse x, die in einer aus den Fasern gebildeten Ebene senkrecht zu einer freien Endkante der Sensorhalterung verläuft, in einem Winkel $\alpha$ angeordnet sind. Mittels dieses Winkels $\alpha$ sind die Steifigkeit und die Eigenfrequenzen der Sensorhalterung festgelegt, wobei die Eigenfrequenzen der Sensorhalterung außerhalb des Frequenzbereichs der Sensorhalterung, in dem sich der Messbereich des Sensors befindet, liegen.

Das Faserverbundmaterial bietet die Möglichkeit, bei geringer Materialdichte die Steifigkeit der Sensorhalterung einzustellen. Durch den sich einstellenden anisotropen Materialaufbau führt die Anpassung der Orientierung der Fasern in einem bestimmten Winkel zu einer direkten Veränderung der Steifigkeit der Sensorhalterung und damit des dynamischen Verhaltens (Eigenfrequenzen).

Zusätzlich bietet das Faserverbundmaterial ein ausgezeichnetes Dämpfungsverhalten, was die Schwingung der Sensorhalterung reduziert und somit eine hohe Lebensdauer begünstigt. Das Faserverbundmaterial ermöglicht außerdem eine Gewichtsersparnis und zusätzliche Freiheitsgrade in der Konstruktion der Sensorhalterung im Vergleich zu metallischen Halterungen.

Durch die spezielle Festlegung der Eigenfrequenzen der Sensorhalterung wird im Betrieb eine stabile Position des Sensors ermöglicht, durch die Störungen bei der Messung bzw. Messungenauigkeiten minimiert werden. Insbesondere ist eine Anpassung der Steifigkeit für individuelle Schwingungsmoden der Sensorhalterung möglich.

In einer bevorzugten Ausführungsform sind die Fasern in nur einer Richtung parallel zueinander angeordnet. Diese Anordnung der Fasern ist einfach und kostengünstig herzustellen.

In einer alternativen Ausführungsform sind die Fasern winklig zueinander angeordnet. Durch diese Anordnung der Fasern wird die Steifigkeit der Sensorhalterung erhöht.

Außerdem können die Steifigkeit und die Eigenfrequenzen der Sensorhalterung auch durch die Art der Fasern, die Beschaffenheit der Fasern, die Art der Matrix, den Faservolumengehalt, die Lieferform der Fasern und/oder die Herstellungsart des Faserverbundmaterials festgelegt sein.

Bei Faserverbundmaterialien besteht die Möglichkeit, die Steifigkeit mit Hilfe der genannten Parameter weiter zu beeinflussen. Die Parameter umfassen z.B. auch das Fasermaterial (z.B. Glasfaser, Kohlefaser) und die Faserlänge (z.B. kontinuierliche Faser, Kurzfaser).

Vorzugsweise ist die Sensorhalterung im Wesentlichen Z-förmig, L-förmig oder U-förmig ausgebildet, wobei die Fasern der Form der Sensorhalterung folgen. Diese einfach aufgebaute Ausgestaltung bietet eine gute Stabilität bei geringem Platzbedarf.

In einer weiteren vorteilhaften Ausgestaltung der Erfindung weist die Sensorhalterung mindestens ein Seitenteil auf, das ebenfalls aus einem Faserverbundmaterial hergestellt ist, und dessen Fasern gegenüber einer Achse z, die in einer aus den Fasern gebildeten Ebene senkrecht zu einer Endkante des Seitenteils verläuft, in einem Winkel $\beta$ angeordnet sind, wobei mittels dieses Winkels $\beta$ die Steifigkeit und die Eigenfrequenzen der Sensorhalterung zusätzlich festgelegt sind.

Das Seitenteil erhöht die Stabilität der Z-förmigen, L-förmigen oder U-förmigen Sensorhalterung und ermöglicht eine weitergehende Beeinflussung der Eigenfrequenzen der Sensorhalterung.

Insbesondere kann die Sensorhalterung eine metallische Grundform aufweisen, auf die das Faserverbundmaterial aufgebracht ist. Auch das Seitenteil kann eine metallische Grundform aufweisen, auf die das Faserverbundmaterial aufgebracht ist. Durch die metallische(n) Grundform(en) können die Stabilität und die Steifigkeit der Sensorhalterung weiter beeinflusst werden.

Im Folgenden werden der Stand der Technik und zwei Ausführungsbeispiele der Erfindung anhand von fünf Figuren näher erläutert. Es zeigen:

Fig. 1 eine perspektivische Ansicht einer Sensorhalterung nach dem Stand der Technik,

Fig. 2 eine perspektivische Ansicht einer erfindungsgemäßen Sensorhalterung,

Fig. 3 ein Diagramm, in dem der Steifigkeitskennwert in Abhängigkeit vom Winkel der Fasern dargestellt ist,

Fig. 4 eine schematische Seitenansicht der erfindungsgemäßen Sensorhalterung,

Fig. 5a eine alternative Ausführungsform der erfindungsgemäßen Sensorhalterung und

Fig. 5b eine Detailansicht der alternativen Ausführungsform gemäß Fig. 5a.

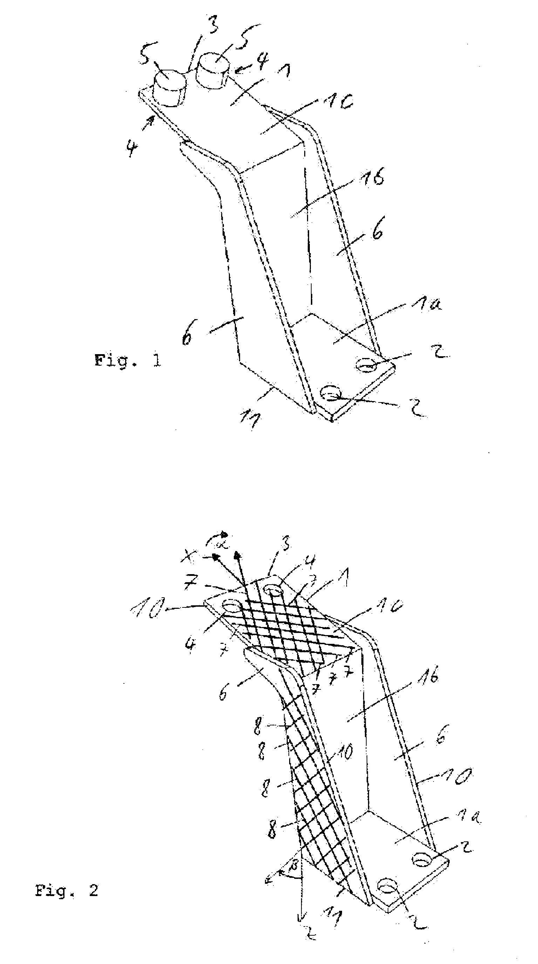

Fig. 1 zeigt eine Sensorhalterung 1 nach dem Stand der Technik. Die Sensorhalterung 1 umfasst zwei Befestigungsbohrungen 2, eine freie Endkante 3, zwei Sensorbohrungen 4, zwei Sensoren 5 und zwei Seitenteile 6.

Die einstückige Sensorhalterung 1 ist im Wesentlichen Z-förmig ausgebildet, wobei die Z-Form durch einen von einem Mittelteil 1b abgewinkelten Befestigungsteil 1a und einen ebenfalls vom Mittelteil 1b abgewinkelten Sensorteil 1c gebildet ist. Der Befestigungsteil 1a und der Sensorteil 1c sind gegenüber dem Mittelteil 1b in entgegen gesetzten Richtungen abgewinkelt. Es ist jedoch auch eine L-förmige, U-förmige oder andersartig abgewinkelte Bauform der Sensorhalterung 1 möglich.

Die freie Endkante 3 begrenzt den Sensorteil 1c der Sensorhalterung 1. Parallel zur freien Endkante 3 sind zwei Sensorbohrungen 4 vorhanden, die in Fig. 1 von den beiden Sensoren 5 verdeckt sind, die in den Sensorbohrungen 4 befestigt sind.

Am Ende des Befestigungsteils 1a sind zwei Befestigungsbohrungen 2 ausgebildet. An der Z-förmigen Sensorhalterung 1 sind zwei im Wesentlichen L-förmige parallele Seitenteile 6 angebracht. Die Seitenteile 6 sind in Richtung der Befestigungsteile 1a der Sensorhalterung 1 von der Endkante 11 begrenzt.

Die Sensorhalterung 1 ist aus einem metallischen Material hergestellt.

Im Betrieb wird die Sensorhalterung 1 gemäß Fig. 1 über die Befestigungsbohrungen 2 an der nicht dargestellten Gasturbinenstruktur der ebenfalls nicht dargestellten Gasturbine befestigt. Die Sensoren 5 messen z.B. Druck, Temperatur und Schwingungen an der Gasturbine. Dabei regen die Gasturbinenschwingungen die Sensorhalterung 1 zum Schwingen an. Bei Erreichen einer Eigenfrequenz der Sensorhalterung 1 wird der Messbetrieb der Sensoren 5 gestört.

Fig. 2 zeigt eine erfindungsgemäße Sensorhalterung 1. Diese Sensorhalterung 1 ist nur geometrisch genauso aufgebaut wie die Sensorhalterung 1 in Fig. 1. Die in Fig. 1 durch die Sensoren 5 verdeckten Sensorbohrungen 4 sind in Fig. 2 sichtbar.

Die innere Struktur der Sensorhalterung 1 in Fig. 2 unterscheidet sich grundlegend von der der Sensorhalterung 1 in Fig. 1.

Die Sensorhalterung 1 in Fig. 2 ist aus einem Faserverbundmaterial 10 aufgebaut. Die Fasern 7 sind rechtwinklig zu einander angeordnet. Gegenüber einer lokalen Achse x, die in einer aus den Fasern 7 gebildeten Ebene senkrecht zu der Endkante 3 der Sensorhalterung 1 verläuft, verlaufen die Fasern 7 in einem Winkel $\alpha$, bzw. $\alpha + 90°$. An den Übergängen vom Sensorteil 1c zum Mittelteil 1b und vom Mittelteil 1b zum Befestigungsteil 1a ist das gesamte, aus den Fasern 7 gebildete Netz gebogen.

Die beiden Seitenteile 6 sind ebenfalls aus einem Faserverbundmaterial 10 aufgebaut. Die Fasern 8 der Seitenteile 6 sind ebenso wie die Fasern 7 der Sensorhalterung 1 rechtwinklig zu einander angeordnet. Gegenüber einer lokalen Achse z, die in einer aus den Fasern 8 gebildeten Ebene senkrecht zu der Endkante 11 des Seitenteils 6 verläuft, sind die Fasern 8 in einem Winkel $\beta$ bzw. $\beta + 90°$ angeordnet.

Alternativ kann die Sensorhalterung 1 auch ohne die Seitenteile 6 ausgeführt sein. Anstelle der zwei Sensoren 5 (vgl. Fig. 1) können auch nur ein oder z.B. drei Sensoren 5 an der Sensorhalterung 1 angebracht sein.

Die Sensorhalterung 1 besitzt eine unendliche Anzahl von Eigenfrequenzen, bei denen ein Eigenschwingverhalten auftritt. Dabei haben die niedrigsten Eigenfrequenzen die höchsten Schwingungsverformungsamplituden. Diese Verformungen wiederum können die Messungen der Sensoren 5 beeinflussen bzw. unbrauchbar machen.

Die Eigenfrequenzen werden i. d. R. von einer externen Vibrationsquelle (hier die laufende Gasturbine) angeregt, wenn diese mit der gleichen Frequenz wie die Eigenfrequenz der Sensorhalterung 1 wirkt. Die Anregungsfrequenz ist von der Drehzahl der nicht dargestellten Gasturbine abhängig.

Das Eigenschwingverhalten der Sensorhalterung 1 ist abhängig von drei Parametern - der Masse, der Bauteilsteifigkeit und der Dämpfung der Sensorhalterung 1. Da die Masse und die Steifigkeit gegenläufige Wirkungen haben, ist die Variabilität in der Einstellung des Eigenschwingverhaltens der Sensorhalterung 1 oftmals sehr schwierig.

Die Struktur der Sensorhalterung 1 gemäß Fig. 2 beruht auf der direkten Beeinflussung des Eigenschwingverhaltens durch den Einsatz eines Faserverbundmaterials 10.

Faserverbundmaterialien haben die Eigenschaft, dass die Materialsteifigkeit abhängig ist vom Volumenanteil der Faser 7 bzw. 8, Art der Faser 7 bzw. 8 sowie der Orientierung der Fasern 7 bzw. 8. Dabei kann auf verschiedenste Material- und Konstruktionsparameter zurückgegriffen werden:

- Art der Fasern 7 bzw. 8 (z.B. Kohlefaser, Glasfaser, Aramidfaser)
- Beschaffenheit der Fasern 7 bzw. 8 (z.B. Langfaser, Kurzfaser)
- rt der Matrix (z.B. Duromermatrix (z.B. Epoxidharz), Thermoplastmatrix (z.B. PEEK))
- Faservolumengehalt (= prozentualer Anteil von Fasern im Bauteilvolumen)
- Lieferform der Fasern 7 bzw. 8 (z.B. Prepreg, Gewebe, Gelege, unidirektionale Einzelschichten)
- Herstellungsart (z.B. Handablageverfahen, Autoklavtechnik, Wickeltechnik, Brainding, Tailored Fibre Placement)
- Orientierung der Fasern 7 bzw. 8 (= Winkel der Faserorientierung relativ zur lokalen Achse x)

Mit der Einführung einer angepassten Steifigkeit lassen sich einzelne Eigenfrequenzen der Sensorhalterung 1 gezielt verändern, so dass die Sensoren 5 nicht beeinflusst werden. Dies erfolgt durch Festlegung des Winkels $\alpha$ der Fasern 7 gegenüber der lokalen Achse x und der Fasern 8 gegenüber der lokalen Achse z.

Die Eigenfrequenz eines schwingenden Systems folgt dem Zusammenhang:

$$Eigenfrequenz \approx \sqrt{\frac{Steifigkeit}{Masse}}$$

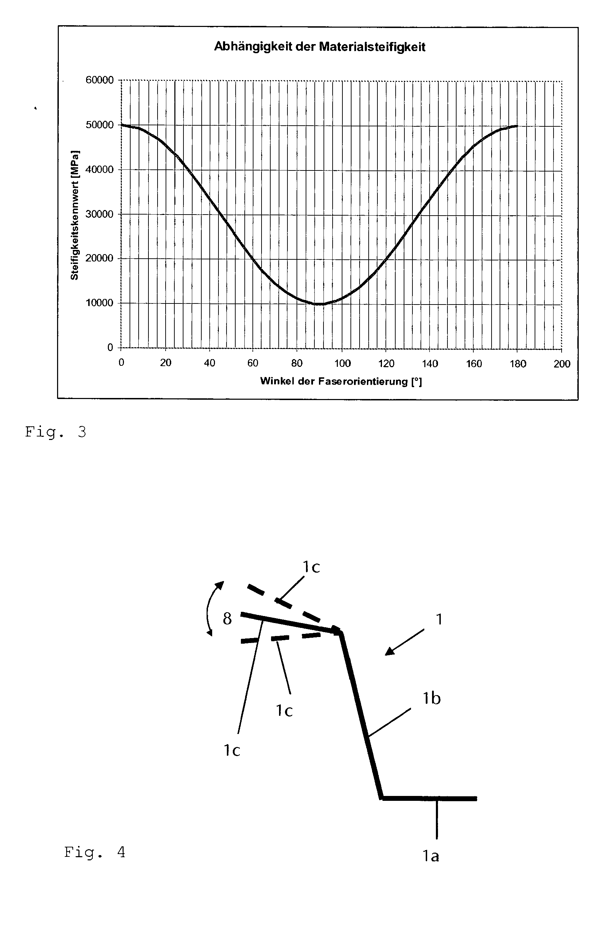

Fig. 3 zeigt die Steifigkeit des Faserverbundmaterials 10 in Abhängigkeit von der Orientierung der Fasern 7 (Winkel $\alpha$) bzw. der Fasern 8 (Winkel $\beta$) gemäß Fig. 2, wobei die Fasern 7 bzw. 8 hier jeweils nicht senkrecht zu einander, sondern ausschließlich parallel zu einander angeordnet sind.

Der Verlauf der Abhängigkeit des Steifigkeitskennwerts von dem Winkel $\alpha$ bzw. $\beta$ der Faserorientierung ist kosinusförmig, wobei alle Werte im positiven Bereich liegen. Die Maximalwerte von beispielsweise 50.000 MPa liegen folglich bei einem Winkel von $\alpha$ bzw. $\beta = 0°$ und 180°, während der Minimalwert von beispielsweise 10.000 MPa bei einem Winkel von $\alpha$ bzw. $\beta = 90°$ liegt. Aus der kosinusförmigen Kurve lässt sich somit für jeden gewünschten Steifigkeitskennwert der optimale Winkel $\alpha$ bzw. $\beta$ ablesen.

Wenn die Fasern 7 bzw. 8 jeweils senkrecht zueinander verlaufen, wie in Fig. 2 dargestellt, wird die Kurve auf einen Bereich von $\alpha$ bzw. $\beta = 0°$ bis 90° gestaucht. Die Maximalwerte liegen dann bei $\alpha$ bzw. $\beta = 0°$ und 90°, während der Minimalwert bei $\alpha$ bzw. $\beta = 45°$ liegt.

In Fig. 4 ist die Biegedeformation bei Schwingung in der Eigenfrequenz der Sensorhalterung 1 schematisch dargestellt. Die Sensorhalterung 1 umfasst auch hier den Befestigungsteil 1a, den Mittelteil 1b und den Sensorteil 1c. Der Sensorteil 1c schwingt im Bereich eines Winkels $\gamma$ um seine Ruheposition (durchgezogene Linie). Die Extrempositionen des Sensorteils 1c sind als gestrichelte Linien dargestellt. Die Seitenteile 6 sind nicht explizit dargestellt.

Durch die Wahl des Winkels $\alpha$ für die Fasern 7 (vgl. Fig. 2) können verschiedene Schwingungsformen dahingehend beeinflusst werden, bei welchen Anregungsfrequenzen sie sich ausprägen. Somit können auch die Eigenfrequenzen in Abhängigkeit von den Anregungsfrequenzen durch Wahl des Winkels $\alpha$ für die Fasern 7 festgelegt werden.

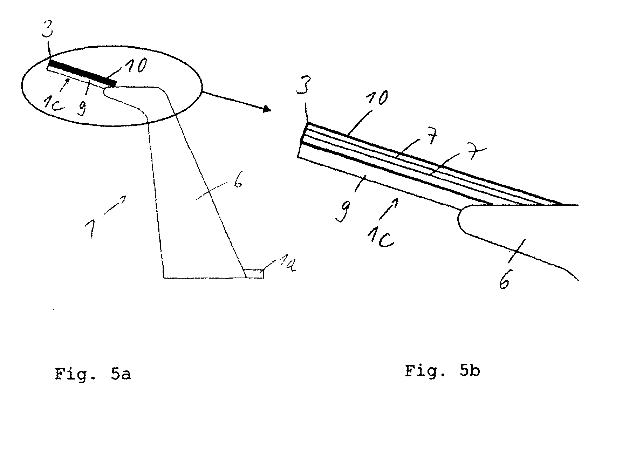

In Fig. 5a ist die Sensorhalterung 1 mit einer alternativen Materialstruktur in einer Seitenansicht dargestellt. Die Geometrie der Sensorhalterung 1 entspricht dabei der Geometrie der Sensorhalterung in Fig. 2.

Bei dieser alternativen Ausführungsform ist die Sensorhalterung 1, bestehend aus dem Befestigungsteil 1a, dem von dem Seitenteil 6 verdeckten Mittelteil 1b und dem Sensorteil 1c, aus einer metallischen Grundform 9 und einer Auflage aus Faserverbundmaterial 10 gebildet (Hybridbauweise). Die Auflage aus Faserverbundmaterial 10 endet bündig an den Kanten der metallischen Grundform 9, z.B. auch an der Endkante 3.

Die Auflage aus Faserverbundmaterial 10 wird durch geeignete Verbindungsverfahren, z.B. Kleben, an der metallischen Grundform 9 angebracht.

In Fig. 5b ist die Sensorhalterung 1 im Bereich des Sensorteils 1c vergrößert dargestellt. Der teilweise durch das Seitenteil 6 verdeckte Sensorteil 1c ist aus der metallischen Grundform 9 und der Auflage aus Faserverbundmaterial 10 gebildet. Im Faserverbundmaterial 10 verlaufen die Fasern 7 parallel zur metallischen Grundform 9. Die metallische Grundform 9 und die Auflage aus Faserverbundmaterial 10 enden an der Endkante 3.

Auch die Seitenteile 6 können aus einem metallischen Grundkörper und einer Auflage aus Faserverbundwerkstoff 10 hergestellt sein.

Die Auflage aus Faserverbundmaterial 10 wird strukturmechanisch derart eingestellt, dass im Verbund mit der metallischen Grundform 9 das Schwingverhalten der Sensorhalterung 1 die Messungen der Sensoren 5 (vgl. Fig. 1) nicht stört.

Im Betrieb erzielen also sowohl die Sensorhalterung 1 gemäß den Fig. 2 und 4 als auch die alternative Ausführungsform der Sensorhalterung 1 gemäß den Fig. 5a und 5b die gleiche Wirkung.

In beiden Fällen ist das Faserverbundmaterial 10 so aufgebaut, dass die Orientierung der Fasern 7 bzw. 8 die Steifigkeit und damit die Eigenfrequenzen der gesamten Sensorhalterung 1 bestimmt. Die Orientierung der Fasern 7 bzw. 8 wird dabei so gewählt, dass die Eigenfrequenzen der Sensorhalterung 1 außerhalb des Frequenzbereichs liegen, in dem sich der Messbereich der Sensoren 5 befindet. Der Messbetrieb der Sensoren 5 wird somit trotz der von der nicht dargestellten Gasturbine erzeugten Anregungsschwingungen nicht gestört. Dadurch sind zuverlässige Messungen während des gesamten Betriebsbereichs der Gasturbine möglich.

Bezugszeichenliste

1     Sensorhalterung
1a    Befestigungsteil
1b    Mittelteil
1c    Sensorteil
2     Befestigungsbohrung

3     Endkante
4     Sensorbohrung
5     Sensor
6     Seitenteil
7     Faser
8     Faser
9     Metallische Grundform
10    Faserverbundmaterial
11    Endkante
x     Achse
$\alpha$     Winkel
z     Achse
$\beta$     Winkel
$\gamma$     Winkel

**Patentansprüche**

1. Sensorhalterung (1) für mindestens einen Sensor (5) an einer Gasturbine, die aus mindestens einem Faserverbundmaterial (10) gebildet ist, wobei die in das Faserverbundmaterial (10) eingebetteten Fasern (7) gegenüber einer Achse x, die in einer aus den Fasern (7) gebildeten Ebene senkrecht zu einer freien Endkante (3) der Sensorhalterung (1) verläuft, in einem Winkel $\alpha$ angeordnet sind und mittels dieses Winkels $\alpha$ die Steifigkeit und die Eigenfrequenzen der Sensorhalterung (1) festgelegt sind, wobei die Eigenfrequenzen der Sensorhalterung (1) außerhalb des Frequenzbereichs der Sensorhalterung (1), in dem sich der Messbereich des Sensors (5) befindet, liegen.

2. Sensorhalterung (1) nach Anspruch 1, **dadurch gekennzeichnet, dass** die Fasern (7) in nur einer Richtung parallel zueinander angeordnet sind.

3. Sensorhalterung (1) nach Anspruch 1, **dadurch gekennzeichnet, dass** die Fasern (7) winklig zueinander angeordnet sind.

4. Sensorhalterung (1) nach einem der Ansprüche 1 bis 3, **dadurch gekennzeichnet, dass** die Steifigkeit und die Eigenfrequenzen der Sensorhalterung (1) auch durch die Art der Fasern (7), die Beschaffenheit der Fasern (7), die Art der Matrix, den Faservolumengehalt, die Lieferform der Fasern (7) und/oder die Herstellungsart des Faserverbundmaterials (10) festgelegt sind.

5. Sensorhalterung (1) nach einem der Ansprüche 1 bis 5, **dadurch gekennzeichnet, dass** die Sensorhalterung (1) im Wesentlichen Z-förmig, L-förmig oder U-förmig ausgebildet ist, wobei die Fasern (7) der Form der Sensorhalterung folgen.

6. Sensorhalterung (1) nach Anspruch 5, **dadurch gekennzeichnet, dass** die Sensorhalterung (1) mindestens ein Seitenteil (6) aufweist, das ebenfalls aus einem Faserverbundmaterial (10) hergestellt ist, und dessen Fasern (8) gegenüber einer Achse z, die in einer aus den Fasern (8) gebildeten Ebene senkrecht zu einer Endkante (11) des Seitenteils verläuft, in einem Winkel β angeordnet sind, wobei mittels dieses Winkels β die Steifigkeit und die Eigenfrequenzen der Sensorhalterung (1) zusätzlich festgelegt sind.

7. Sensorhalterung (1) nach einem der vorhergehenden Ansprüche, **dadurch gekennzeichnet, dass** die Sensorhalterung (1) eine metallische Grundform (9) aufweist, auf die das Faserverbundmaterial (10) aufgebracht ist.

8. Sensorhalterung (1) nach Anspruch 6 oder 7, **dadurch gekennzeichnet, dass** das Seitenteil (6) eine metallische Grundform aufweist, auf die das Faserverbundmaterial (10) aufgebracht ist.


**Claims**

1. Sensor bracket (1) for at least one sensor (5) on a gas turbine, made of at least one fiber-composite material (10), with the fibers (7) embedded in the fiber-composite material (10) being oriented at an angle α relative to an axis x extending vertically to a free end edge (3) of the sensor bracket (1) in a plane established by the fibers (7), and the stiffness and the natural frequencies of the sensor bracket (1) being defined by said angle α, with the natural frequencies of the sensor bracket (1) lying outside of the frequency range of the sensor bracket (1), which includes the measuring range of the sensor (5).

2. Sensor bracket (1) in accordance with Claim 1, **characterized in that** the fibers (7) are arranged parallelly to each other in only one direction.

3. Sensor bracket (1) in accordance with Claim 1, **characterized in that** the fibers (7) are arranged angularly to each other.

4. Sensor bracket (1) in accordance with one of the Claims 1 to 3, **characterized in that** the stiffness and the natural frequencies of the sensor bracket (1) are also defined by the type of the fibers (7), the texture of the fibers (7), the type of the matrix, the fiber volume content, the form of delivery of the fibers (7) and/or the type of manufacture of the fiber-composite material (10).

5. Sensor bracket (1) in accordance with one of the Claims 1 to 5, **characterized in that** the sensor bracket (1) is essentially Z-shaped, L-shaped or U-shaped, with the fibers (7) following the shape of the sensor bracket.

6. Sensor bracket (1) in accordance with Claim 5, **characterized in that** the sensor bracket (1) has at least one side member (6) which is also made of a fiber-composite material (10) and whose fibers (8) are arranged at an angle β relative to an axis z extending vertically to an end edge (11) of the side member in a plane established by the fibers (8), with the stiffness and the natural frequencies of the sensor bracket (1) being additionally defined by said angle β.

7. Sensor bracket (1) in accordance with one of the preceding Claims, **characterized in that** the sensor bracket (1) has a metallic base form (9) to which the fiber-composite material (10) is applied.

8. Sensor bracket (1) in accordance with Claim 6 or 7, **characterized in that** the side member (6) has a metallic base form to which the fiber-composite material (10) is applied.


**Revendications**

1. Support de capteur (1) pour au moins un capteur (5) sur une turbine à gaz, qui est constitué d'au moins un matériau composite renforcé par des fibres (10), sachant que les fibres (7) noyées dans le matériau composite renforcé par des fibres (10) sont disposées suivant un angle α par rapport à un axe x qui s'étend dans un plan formé par les fibres (7) perpendiculairement à une arête d'extrémité libre (3) du support de capteur (1), et qu'au moyen de cet angle α sont déterminées la rigidité et les fréquences propres du support de capteur (1), les fréquences propres du support de capteur (1) se situant hors de la gamme des fréquences du support de capteur (1) dans laquelle se trouve la plage de mesure du capteur (5).

2. Support de capteur (1) selon la revendication n° 1, **caractérisé en ce que** les fibres (7) sont parallèles entre elles dans une seule direction.

3. Support de capteur (1) selon la revendication n° 1, **caractérisé en ce que** les fibres (7) sont arrangées à un angle les unes par rapport aux autres.

4. Support de capteur (1) selon une des revendications n° 1 à n° 3, **caractérisé en ce que** la rigidité et les fréquences propres du support de capteur (1) sont également déterminées par la nature des fibres (7), la qualité des fibres (7), la nature de la matrice, la teneur volumétrique en fibres, le conditionnement des fibres (7) et/ou le mode de fabrication du matériau composite renforcé par des fibres (10).

5. Support de capteur (1) selon une des revendications n° 1 à n° 5, **caractérisé en ce que** le support de capteur (1) est pour l'essentiel conçu en forme de Z, de L ou de U, les fibres (7) épousant la forme du support de capteur.

6. Support de capteur (1) selon la revendication n° 5, **caractérisé en ce que** le support de capteur (1) présente au moins une partie latérale (6) qui est également fabriquée dans un matériau composite renforcé par des fibres (10), et dont les fibres (8) sont disposées suivant un angle β par rapport à un axe z qui s'étend dans un plan formé par les fibres (8) perpendiculairement à une arête d'extrémité (11) de la partie latérale, la rigidité et les fréquences propres du support de capteur (1) étant en outre déterminées au moyen de cet angle β.

7. Support de capteur (1) selon une des revendications précédentes, **caractérisé en ce que** le support de capteur (1) présente une forme de base métallique (9) sur laquelle est appliqué le matériau composite renforcé par des fibres (10).

8. Support de capteur (1) selon la revendication n° 6 ou n° 7, **caractérisé en ce que** la partie latérale (6) présente une forme de base métallique sur laquelle est appliqué le matériau composite renforcé par des fibres (10).

Fig. 1

Fig. 2

Fig. 3

Fig. 4

Fig. 5a

Fig. 5b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4860442 A
- EP 0768472 A2

- JP 09317821 A